# EUROPEAN PATENT SPECIFICATION

(11) **EP 3 201 451 B1**
(45) Date of publication and mention of the grant of the patent: **18.03.2020**
(21) Application number: 15845957.8
(22) Date of filing: 28.09.2015
(51) Int. Cl.: F02B 37/16, F01N 3/34

(54) **A TURBOMACHINERY ASSEMBLY FOR AN INTERNAL COMBUSTION ENGINE USING A VENTURI APPARATUS**
TURBOMASCHINENANORDNUNG FÜR EINE BRENNKRAFTMASCHINE MIT VENTURI-VORRICHTUNG
ENSEMBLE TURBOMACHINE POUR MOTEUR À COMBUSTION INTERNE UTILISANT UN APPAREIL VENTURI

(30) Priority: 29.09.2014 ZA 201407070
(43) Date of publication of application: 09.08.2017
(73) Proprietor: Boost Mechanics (Pty) Limited, 0087 Pretoria (ZA)
(72) Inventor: MATHEBULA, Ipeleng Samson, 1687 Midrand (ZA)
(74) Representative: Roberts, Gwilym Vaughan
(86) International application number: PCT/IB2015/057418
(87) International publication number: WO 2016/051324

(56) References cited:
- FR-A3- 2 934 324
- GB-A- 2 479 618
- JP-A- H0 617 646
- US-A1- 2010 000 204
- US-A1- 2011 155 108
- US-A1- 2013 081 391
- US-A1- 2013 232 971
- US-B1- 6 543 428
- US-B2- 7 779 634
- US-B2- 8 272 215

## Description

### FIELD OF INVENTION

This invention relates to internal combustion engines, and more particularly to a turbomachinery assembly and forced induction air supply of an engine. The invention further relates to an associated method of reducing turbo lag, pumping losses and exhaust emissions in a manner that enables the fuel economy/efficiency of internal combustion engines to be enhanced.

### BACKGROUND OF INVENTION

The power output of a typical engine is directly proportional to the amount of fuel being burned for producing useful work. The amount of fuel that can be burnt is a function of the amount of air or oxygen flowing through the engine. Hence, power output can be regulated by controlling fuel and/or air intake. Air intake can be simply altered by changing engine speed or varying airflow rate through the engine by using techniques such as throttling.

Conventional throttling techniques limit airflow by introducing flow restrictions like butterfly throttles, which adversely affect efficiency at low engine loads. Engine downsizing, downspeeding and turbocharging is an example of a method that reduces throttling losses under part load conditions. Downsizing and downspeeding reduce the amount of airflow in such a manner that less throttling is required to achieve the same power output when boost pressures are small or negligible. However, a rapid increase in load under these conditions requires high engine speeds and/or minimal turbo lag which can't be readily achieved during in gear accelerations.

Thus, there are various methods which intend to ameliorate problems associated with turbo-lag and/or throttling losses. Variable Turbine Geometry (VTG) turbochargers is one of the techniques employed in controlling boost pressure and airflow through the engine by simply varying the turbine housing's aspect ratio. The VGT turbocharger is effective in reducing turbo-lag and adding a degree of throttling, however, the solution introduces complex moving parts that are sensitive to high temperatures and are not readily suitable for gasoline applications.
Yet another technique of reducing turbo-lag that is suitable for gasoline engines is employing an electronic wastegate. The typical control circuit or ECU of such an engine opens the turbocharger wastegate under part load conditions to reduce boost pressure and then regulates the boost pressure to achieve predetermined pressure set points when throttle inputs change. A problem with this method of controlling the amount of exhaust gas that passes the turbine is that most of the by-passed gases are lost to the environment - they are wasted as the name of the wastegate implies.
The Applicant thus wishes to provide an affordable turbomachinery assembly and associated method which redeploys gas that would otherwise be wasted. Advantageously, the assembly ensures that the residual energy in exhaust gases is purged optimally to reduce turbo-lag and pumping losses while supplying excess air for reducing carbon monoxide (CO), unburnt hydrocarbon (HCs) and Nitrogen Oxides (NOx) emissions levels.

### SUMMARY OF INVENTION

According to a first aspect of the invention, there is provided a turbomachinery assembly for an internal combustion engine according to independent Claim 1.

Different embodiments may realise slightly different advantages with different operating characteristics and this will be described more fully below.

### BRIEF DESCRIPTION OF DRAWINGS

The invention will now be further described, by way of example, with reference to the accompanying diagrammatic drawings.

In the drawings:
FIG. 1 shows a schematic diagram of the generic embodiment of the turbomachinery assembly;
FIG. 2 shows the method for reducing turbo-lag and pumping losses on a compressor map (Absolute pressure against Mass flow rate);
FIG. 3 shows a schematic diagram of first embodiment of a turbomachinery assembly in accordance with the invention;
FIG. 4 shows schematic diagram of the second embodiment of a turbomachinery assembly in accordance with the invention;
FIG. 5 shows schematic views of the first embodiment of a venturi apparatus of the assembly of FIG. 3 and FIG. 4;
FIG. 6 shows schematic views of a second embodiment of a venturi apparatus of the assembly of FIG. 3 and FIG. 4;

### DETAILED DESCRIPTION OF EXAMPLE EMBODIMENT

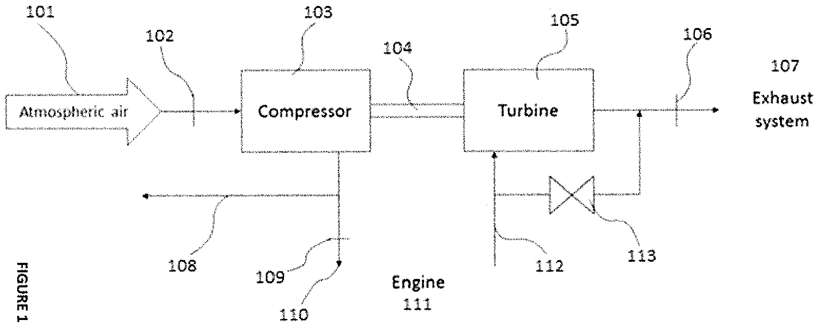

FIG. 1 illustrates a generic embodiment of the turbomachinery assembly. The turbomachinery assembly forms part of an internal combustion engine assembly. The engine 111 may be spark ignition (e.g., petrol fuelled), compression ignition (e.g., diesel fuelled) or other fuels. The engine may be reciprocating, rotary or an alternative arrangement which allow for energy to be extracted by burning fuel.

The turbomachinery assembly includes some conventional components. More specifically, the turbomachinery assembly has a compressor 103 which has a compressor inlet operable to draw in atmospheric air 101. There will likely be other conventional components which are not illustrated (e.g., an air filter) but only those components which are germane to the invention are illustrated. The compressor 103 is driven by a turbine 105 which is connected to the compressor 103 by means of a mechanical shaft 104. A turbine outlet is directed to an exhaust system 107 comprising of components like emission treatment apparatus (e.g., a catalytic converter, muffler and silencer)

The compressor 103 outlet splits into two branches. The first branch 110 supplies intake air into the engine 111 and the second path 108 is used for tuning the pneumatic resistance after the compressor outlet. The second path 108 may be connected to a venturi 500 or 600, atmosphere, diverter or recirculation valve. The flow through the second path 108 may be regulated by a valve 305 or 405 that receives control signals from the ECU (not shown). The ECU may use oxygen sensors 106, manifold absolute pressure sensors 109, corrected mass air flow sensor 102 and other signals (e.g., throttle input signals) to control fuel metering and air intake.

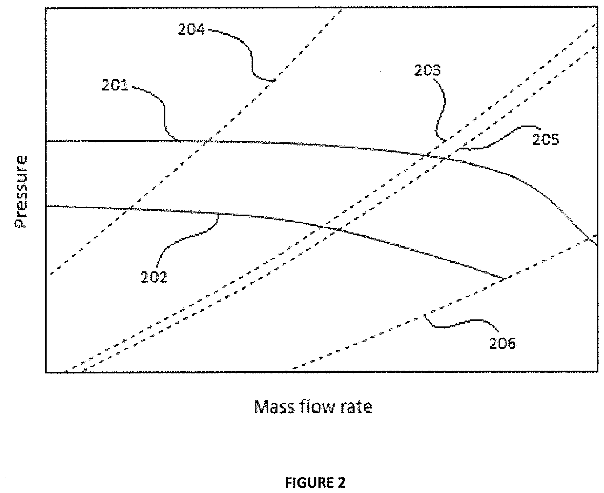

FIG. 2 illustrates the effect of the second path 108 after the compressor 103 outlet by example. The resistance line 203 at Wide Open Throttle (WOT) is assumed to coincide with the line of maximum compression efficiency. The airflow at part load is conventionally reduced by increasing the flow resistance through the engine as shown by line 204. The first compressor wheel speed line 202 indicates that a sudden load step from part to full load may result with an increase in mass flow rate with a slight decrease in manifold pressure, thereby causing turbo lag before maximum torque/power is attained.
The second path 108 in this invention introduces an additional path which reduces the overall flow resistance of the engine assembly. This reduction in flow resistance, line 206, causes a drop in intake pressure and higher mass flow rates when compared to the WOT resistance line 203 at the same compressor wheel speed 202. The drop in pressure is beneficial for minimising throttling losses and air intake is managed by diverting, venting or recirculating the excess flow.

A sudden load increment in this case results with an increase in manifold pressure and a reduction in excess flow when second path 108 is throttled. The effect of throttling the second path 108 is more pronounced at higher compressor wheel speeds line 201. This method reduces turbo lag and makes excess air available for treating exhaust emissions when required.
A tuned passive resistance path that does not have an active valve causes the compressor wheel to rotate slightly faster to maintain the desired boost pressure. Line 205 illustrates an example of the tuned resistance path and the engine-intake mass flow rate decoupling under WOT conditions. The mass flow rate decoupling provides a spooling lead at the expense of allowing excess air flow to bypass the engine.

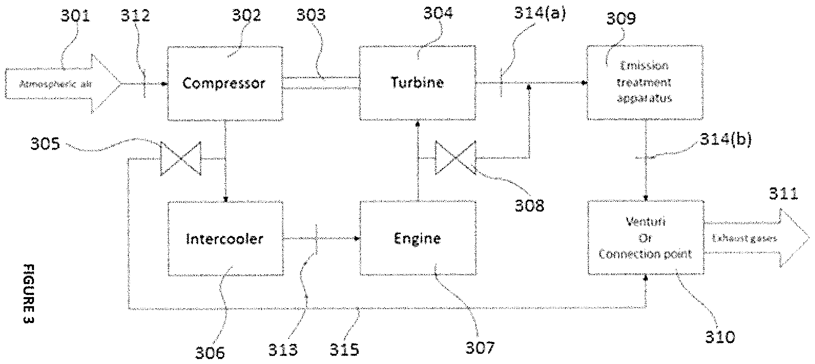

FIG. 3 shows a schematic diagram of first embodiment of a turbomachinery assembly in accordance with the invention. This embodiment is ideal but it is not limited to spark ignition or gasoline engines 111 with three-way catalytic converters 309 that reduce exhaust emissions optimally when the fuel is burned close to the stoichiometric ratio.
Intake air 301 is compressed by the compressor 302 which may be a shaft driven compressor like a supercharger. The first path 110 of the compressor outlet goes through the intercooler 306 which may be a liquid-air or air-air intercooler that is installed upstream of the engine 307 intake manifold. The exhaust gases from the engine 307 exhaust manifold may be fed through a VGT, single or twin scroll turbine housing and turbine 304 that may or may not have a wastegate 308 when a turbine is installed as part of charge air assembly. The exhaust gases are then fed directly to the emission treatment device 309 before mixing with the bypass air.
The venturi or connection point 310 may be used in two ways. The first and ideal iteration, which is not in line with the invention as defined in claim 1, uses the exhaust gases that are compressed by the engine 307 as motive fluid 505 or 605 for entraining excess air in the feed line 502 or 602 of the venturi.

This arrangement reduces the manifold intake pressure during part load such that engine pumping losses are reduced. It is ideal to employ a control valve 305 that increases flow resistance in the second path 108 at full load to allow the intake manifold to accumulate enough pressure to increase engine torque and power output. The advantage of this embodiment is usable for turbocharged, supercharged and normally aspirated engines.

The second iteration of the venturi installation. which is according to claim 1, may be passive or regulated by a control valve 305. The motive duct 501 or 601 may be connected to second or bypass flow path 108 and the feed line 502 or 602 may be connected to the exhaust gases exiting the emission treatment device 309. In both iterations, the exhaust gases and excess air mixture exit through the outlet pipe 503 or 603 of the venturi to the remainder of the exhaust system. A bypass flow compensated MAF sensor 312 or MAP 313 may be used for fuel metering and oxygen sensors 314a and/or 314b may be used as feedback for controlling the combustion process.

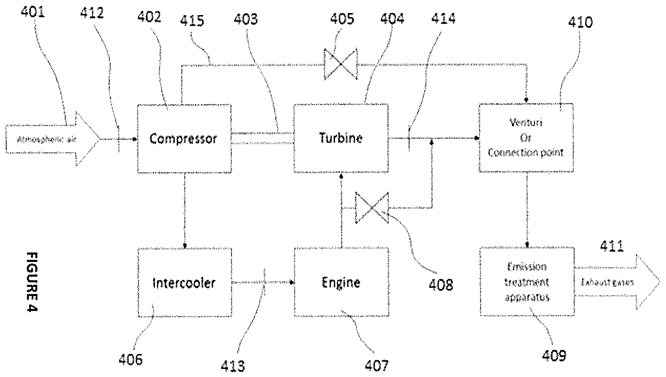

FIG 4. Shows a schematic diagram of the second embodiment of a turbomachinery assembly in accordance with the invention. This embodiment is ideal but it is not limited to ultra-lean burn gasoline and compression ignition engines 111 with emission treatments apparatus 409 that requires excess air or oxygen to operate effectively. These apparatus include but are not limited to Diesel Oxidation Catalysts (DOC), two-way catalytic converters and Selective Catalytic Reduction (SCRs).
This embodiment is similar to the first embodiment with the exception of the installation of the venturi or connection 410. It is ideal to connect the second path 108 to the venturi motive line 501 or 601 with the feed line 502 or 602 being downstream of the turbine 404 outlet. The outlet of the venturi 503 or 603 is connected upstream to the emission treatment apparatus 409 to ensure that there is always sufficient or excess air to treat exhaust emissions.

The second path may be passive without a control valve 405 using tuned resistance line 205 or may have adjustable throttling in analogous manner presented in the first embodiment. A MAP 413 or bypass flow compensated MAF sensor 412 may be used for fuel metering and oxygen sensors 314a and/or 314b may be used as feedback for controlling the combustion process.

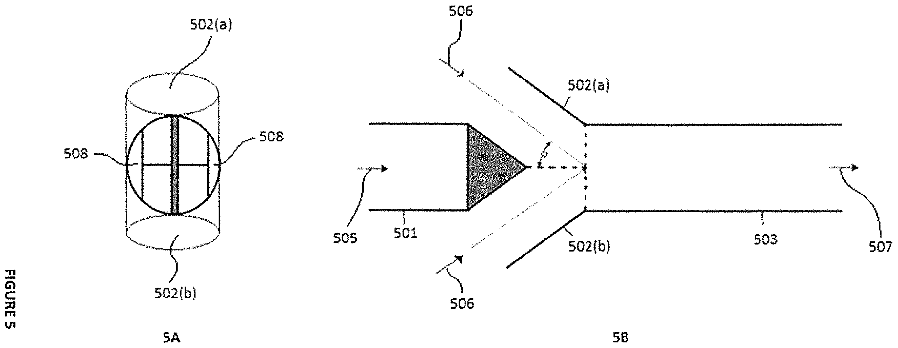

FIG. 5 shows a schematic diagram of first embodiment of the venturi apparatus or connection point. The motive fluid 505 enters the venturi through the motive fluid duct 501. Feed flow 506 may enter the device through two feed tubes 502a and 502b that are inclined in the direction of the motive flow. The cylindrical feed tubes 502a and 502b that reduce the flow area 508 while encouraging flow separation in the region where the feed flow 506 is entrained. The flow mixture 507 exits the venturi through the outlet duct 503.

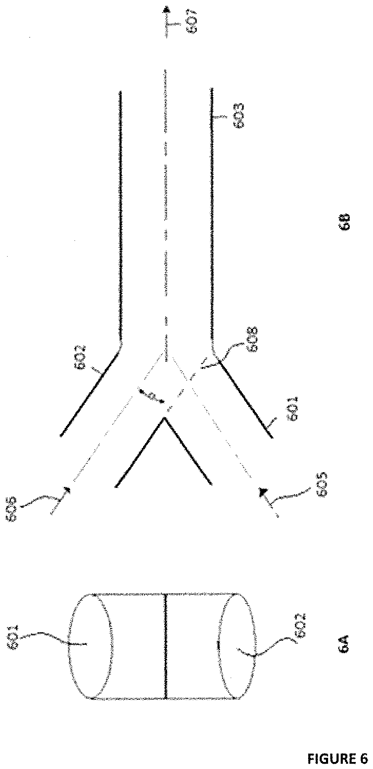

FIG 6. Shows a schematic diagram of second embodiment of the venturi apparatus or connection point. The motive fluid 605 enters the venturi at an angle and a single feed tube 602 may be used to create a similar obstruction to the one mentioned in FIG 5. The feed reduces that flow area 608 of the motive fluid such that the venturi effect is achieved. Both streams 607 exit the venturi in through duct 603.

## Claims

1. A turbomachinery assembly for an internal combustion engine (111), the turbomachinery assembly including a venturi apparatus (310; 410) having at least one motive inlet, at least one feed inlet, and an outlet,
wherein
said feed inlet is connected directly or indirectly to a turbine (105) outlet;
said motive inlet is connected directly or indirectly to a compressor (103) outlet in such a manner that said motive and feed inlet do not share flow sources, and
the venturi outlet is connected, either directly or indirectly, to an exhaust network (107) for conveying exhaust gases to the atmosphere, **characterised in that**;
the turbomachinery assembly includes a secondary path (108) of the compressor (103) outlet with a valve (305; 405) which receives control signals from an ECU (Engine Control Unit), the valve being configured to control a degree of compressor choke, wherein the valve (305; 405) on the secondary path (108) of the compressor (103) outlet is configured to allow the engine (111) to increase boost pressures and reduce turbo lag by throttling the flow through the secondary path (108) during load increments; and
the secondary path is connected to the motive inlet of the venturi apparatus which is thereby configured to entrain a fraction of compressed air from the compressor outlet as a motive fluid.

2. A turbomachinery assembly as claimed in claim 1, wherein said venturi apparatus includes one or more of the following:
a tuned throat area for intake-engine mass flow rate decoupling such that the compressor (103) operates closer to the choke line;
a hole equivalent to the tuned venturi throat area, said hole being configured to vent a portion of the charge air to the atmosphere; and
a recirculation valve operable to continuously regulate compressor choke (206) by altering charge air recirculation.

3. A turbomachinery assembly as claimed in any of the preceding claims, wherein the valve (305; 405) of the secondary path (108) is configured, after the compressor (103), to decrease intake manifold pressure thereby reducing pumping losses through the engine (111) under part-load conditions.

4. A turbomachinery assembly as claimed in any of the preceding claims, wherein the venturi apparatus (310, 410) is configured to employ a fraction of the compressed intake air from the compressor (103) outlet as a motive fluid (505; 605) that is configured to create a partial vacuum for entraining and conveying exhaust gases through the exhaust system (107).

5. A turbomachinery assembly as claimed in any of the preceding claims, wherein the venturi apparatus (310; 410) is configured to introduce fresh air through the venturi so as to operably allow for unwanted pollutants like unburnt hydrocarbons (HC) and Carbon Monoxide (CO) to be oxidized.

6. A turbomachinery assembly as claimed in any of the preceding claims, wherein said assembly includes a Manifold Absolute Sensor (MAP) (109) or boost pressure sensor (313; 413) which is configured to work in conjunction with other sensors to provide the engine ECU with information for fuel metering and charge air control purposes.

7. A turbomachinery assembly as claimed in any of the preceding claims, the engine (111) employing indirect injection or direct injection with the capability of compression and/or spark ignition.

8. A turbomachinery assembly as claimed in claim 7, wherein the engine (111) is configured to operate at ultra-lean, lean, stoichiometric and/or rich burn fuel ratios.

9. A turbomachinery assembly as claimed in any of claims 7 to 8, wherein throttling techniques, like butterfly valve and/or variable valve timing, are used to operatively control the amount of air flowing through the engine (111).

10. A turbomachinery assembly as claimed in any of the preceding claims, wherein the engine (111) outlet is connected directly to the turbine (105) inlet, said turbine inlet including a wastegate path operable to bypass the turbine so as to control pressure.

11. A turbomachinery assembly as claimed in any of the preceding claims, including oxygen sensors (106) which are furnished with a heating element for improving accuracy during cold start-ups and/or part load operations when there is insufficient exhaust gas heat.

12. A turbomachinery assembly as claimed in any of the preceding claims, wherein the venturi apparatus (500; 600) introduces an obstruction (502a, 502b; 602) which serves to operatively reduce the area (508; 608) of the fluid flow path, thereby increasing the flow speed around the obstruction and to decrease the local static pressure, in use, so as to create the venturi effect.

13. A turbomachinery assembly as claimed in any of the preceding claims, wherein the leading edge of the obstruction in the venturi apparatus or connection point is curved, flat or bluff body so as to operatively reduce the effective flow area (508; 608) while creating a flow separation region behind the obstruction in the absence of feed flow.

## Patentansprüche

1. Turbomaschinenanordnung für einen Verbrennungsmotor (111), wobei die Turbomaschinenanordnung eine Venturi-Vorrichtung (310; 410) mit mindestens einem Antriebseinlass, mindestens einem Zuführeinlass und einem Auslass beinhaltet,
wobei
der Zuführeinlass direkt oder indirekt mit einem Turbinen- (105) Auslass verbunden ist,
der Antriebseinlass in solcher Weise direkt oder indirekt mit einem Verdichter- (103) Auslass verbunden ist, dass der Antriebs- und der Zuführeinlass keine gemeinsamen Strömungsquellen aufweisen, und
der Venturi-Auslass entweder direkt oder indirekt mit einem Abluftsystem (107) verbunden ist, um Abgase in die Atmosphäre zu befördern, **dadurch gekennzeichnet, dass** die Turbomaschinenanordnung einen Sekundärweg (108) des Verdichter- (103) Auslasses mit einem Ventil (305; 405) beinhaltet, das Steuersignale von einer ECU (Engine Control Unit, Motorsteuereinheit) empfängt, wobei das Ventil dafür ausgelegt ist, einen Verdichterdrosselungsgrad zu steuern, wobei das Ventil (305; 405) auf dem Sekundärweg (108) des Verdichter- (103) Auslasses dafür ausgelegt ist, dem Motor (111) zu ermöglichen, durch Drosseln des Stroms durch den Sekundärweg (108) während Laststeigerungen Ladedrücke zu erhöhen und Turboverzögerung zu verringern, und
der Sekundärweg mit dem Antriebseinlass der Venturi-Vorrichtung verbunden ist, welche dadurch dafür ausgelegt ist, einen Druckluftanteil aus dem Verdichterauslass als Antriebsfluid mitzuziehen.

2. Turbomaschinenanordnung nach Anspruch 1, wobei die Venturi-Vorrichtung eines oder mehrere der Folgenden beinhaltet:
einen abgestimmten Verengungsbereich für Massenstromentkopplung zwischen Ansaugöffnung und Motor derart, dass der Verdichter (103) näher an der Drosselungslinie arbeitet,
ein Öffnungsäquivalent zu dem abgestimmten Venturi-Verengungsbereich, wobei die Öffnung dafür ausgelegt ist, einen Teil der Ladeluft in die Atmosphäre abzulassen, und
ein Rückführungsventil, das betriebsfähig ist, die Verdichterdrosselung (206) durch Änderung der Ladeluftrückführung kontinuierlich zu regulieren.

3. Turbomaschinenanordnung nach einem der vorhergehenden Ansprüche, wobei das Ventil (305; 405) des Sekundärwegs (108) dafür ausgelegt ist, nach dem Verdichter (103) einen Ansaugrohrdruck zu senken und dadurch Pumpverluste durch den Motor (111) unter Teillastbedingungen zu verringern.

4. Turbomaschinenanordnung nach einem der vorhergehenden Ansprüche, wobei die Venturi-Vorrichtung (310, 410) dafür ausgelegt ist, einen Anteil der verdichteten Ansaugluft aus dem Verdichter- (103) Auslass als Antriebsfluid (505; 605) einzusetzen, das dafür ausgelegt ist, Unterdruck zum Mitziehen und Befördern von Abgasen durch das Abluftsystem (107) zu erzeugen.

5. Turbomaschinenanordnung nach einem der vorhergehenden Ansprüche, wobei die Venturi-Vorrichtung (310; 410) dafür ausgelegt ist, Frischluft durch die Venturi-Vorrichtung einzuleiten, um operativ zu ermöglichen, dass unerwünschte Schadstoffe wie unverbrannte Kohlenwasserstoffe (HC) und Kohlenmonoxid (CO) oxidiert werden.

6. Turbomaschinenanordnung nach einem der vorhergehenden Ansprüche, wobei die Anordnung einen Saugrohr-Absolutdruck- (Manifold Absolute Sensor, MAP-) Sensor (109) oder Ladedrucksensor (313; 413) beinhaltet, der dafür ausgelegt ist, mit anderen Sensoren zusammenzuarbeiten, um der Motor-ECU Informationen für Kraftstoffdosierungs- und Ladeluftsteuerungszwecke bereitzustellen.

7. Turbomaschinenanordnung nach einem der vorhergehenden Ansprüche, wobei der Motor (111) indirekte Einspritzung oder direkte Einspritzung mit der Möglichkeit einer Kompressions- und/oder Funkenzündung einsetzt.

8. Turbomaschinenanordnung nach Anspruch 7, wobei der Motor (111) dafür ausgelegt ist, mit ultramageren, mageren, stöchiometrischen und/oder angereicherten Kraftstoffverbrennungsverhältnissen zu arbeiten.

9. Turbomaschinenanordnung nach einem der Ansprüche 7 bis 8, wobei Drosselungstechniken wie Drosselklappen- und/oder variable Ventilsteuerung verwendet werden, um die Menge an durch den Motor (111) strömender Luft operativ zu steuern.

10. Turbomaschinenanordnung nach einem der vorhergehenden Ansprüche, wobei der Motor- (111) Auslass direkt mit dem Turbinen- (105) Einlass verbunden ist, wobei der Turbineneinlass einen Wastegate-Weg beinhaltet, der betriebsfähig ist, zur Drucksteuerung die Turbine zu umgehen.

11. Turbomaschinenanordnung nach einem der vorhergehenden Ansprüche, welche Sauerstoffsensoren (106) beinhaltet, die mit einem Heizelement zur Verbesserung der Genauigkeit während eines kalten Anfahrens und/oder Teillastvorgängen ausgestattet sind, bei denen keine ausreichende Abgaswärme vorhanden ist.

12. Turbomaschinenanordnung nach einem der vorhergehenden Ansprüche, wobei die Venturi-Vorrichtung (500; 600) ein Hindernis (502a, 502b; 602) einführt, das dazu dient, die Fläche (508; 608) des Fluidströmungswegs operativ zu verringern, wodurch die Strömungsgeschwindigkeit um das Hindernis herum verringert wird, und um im Betrieb den lokalen statischen Druck zu senken, um den Venturi-Effekt zu erzeugen.

13. Turbomaschinenanordnung nach einem der vorhergehenden Ansprüche, wobei die Anströmkante des Hindernisses in der Venturi-Vorrichtung oder dem Verbindungspunkt gekrümmt, flach oder stumpf ist, um operativ die effektive Strömungsfläche (508; 608) zu verringern und gleichzeitig hinter dem Hindernis bei Fehlen eines Zuführstroms eine Strömungsteilungsregion zu erzeugen.

## Revendications

1. Ensemble à turbomachinerie pour un moteur à combustion interne (111), l'ensemble à turbomachinerie incluant un appareil venturi (310 ; 410) ayant au moins une entrée motrice, au moins une entrée d'alimentation, et une sortie,
dans lequel
ladite entrée d'alimentation est raccordée directement ou indirectement à une sortie d'une turbine (105) ;
ladite entrée motrice est raccordée directement ou indirectement à une sortie d'un compresseur (103) de manière telle que lesdites entrées motrice et d'alimentation ne partagent pas des sources d'écoulement, et
la sortie venturi est raccordée, directement ou indirectement, à un réseau d'échappement (107) pour transporter des gaz d'échappement vers l'atmosphère, **caractérisé en ce que** ;
l'ensemble à turbomachinerie inclut un trajet secondaire (108) de la sortie du compresseur (103) avec une soupape (305 ; 405) qui reçoit des signaux de commande à partir d'une ECU (« Engine Control Unit »), la soupape étant configurée pour commander un degré d'étrangleur de compresseur, dans lequel la soupape (305 ; 405) sur le trajet secondaire (108) de la sortie du compresseur (103) est configurée pour permettre au moteur (111) d'augmenter des pressions de suralimentation et de réduire un retard turbo en étranglant l'écoulement à travers le trajet secondaire (108) durant des incréments de charge ; et
le trajet secondaire est raccordé à l'entrée motrice de l'appareil venturi qui est ainsi configuré pour entraîner une fraction d'air comprimé provenant de la sortie de compresseur en tant que fluide moteur.

2. Ensemble à turbomachinerie selon la revendication 1, dans lequel ledit appareil venturi inclut un ou plusieurs de ce qui suit :
une section d'étranglement réglée pour découplage de débit massique admission-moteur de telle sorte que le compresseur (103) fonctionne plus près de la ligne d'étrangleur ;
un trou équivalent à la section d'étranglement venturi réglée, ledit trou étant configuré pour évacuer une partie de l'air de suralimentation vers l'atmosphère ; et
une soupape de recirculation utilisable pour réguler en continu l'étrangleur de compresseur (206) en modifiant une recirculation d'air de suralimentation.

3. Ensemble à turbomachinerie selon l'une quelconque des revendications précédentes, dans lequel la soupape (305 ; 405) du trajet secondaire (108) est configurée, après le compresseur (103), pour réduire la pression de tubulure d'admission, ainsi réduisant des pertes de pompage à travers le moteur (111) dans des conditions de charge partielle.

4. Ensemble à turbomachinerie selon l'une quelconque des revendications précédentes, dans lequel l'appareil venturi (310, 410) est configuré pour employer une fraction de l'air d'admission comprimé à partir de la sortie du compresseur (103) en tant que fluide moteur (505 ; 605) qui est configuré pour créer un vide partiel pour entraîner et transporter des gaz d'échappement à travers le système d'échappement (107).

5. Ensemble à turbomachinerie selon l'une quelconque des revendications précédentes, dans lequel l'appareil venturi (310 ; 410) est configuré pour introduire de l'air frais à travers le venturi afin de permettre fonctionnellement à des polluants indésirables, comme des hydrocarbures (HC) et du monoxyde de carbone (CO) non brûlés, d'être oxydés.

6. Ensemble à turbomachinerie selon l'une quelconque des revendications précédentes, dans lequel ledit ensemble inclut un capteur absolu de tubulure (MAP) (109) ou un capteur de pression de suralimentation (313 ; 413) qui est configuré pour fonctionner conjointement avec d'autres capteurs pour fournir à l'ECU de moteur des informations dans des buts de dosage de carburant et de commande d'air de suralimentation.

7. Ensemble à turbomachinerie selon l'une quelconque des revendications précédentes, le moteur (111) employant une injection indirecte ou injection directe avec la capabilité d'allumage par compression et/ou par étincelle.

8. Ensemble à turbomachinerie selon la revendication 7, dans lequel le moteur (111) est configuré pour fonctionner à des rapports de carburant consommé ultra-pauvre, pauvre, stœchiométrique et/ou riche.

9. Ensemble à turbomachinerie selon l'une quelconque des revendications 7 à 8, dans lequel des techniques d'étranglement, comme un calage de soupape papillon et/ou de soupape variable, sont utilisées pour fonctionnellement commander la quantité d'air s'écoulant à travers le moteur (111).

10. Ensemble à turbomachinerie selon l'une quelconque des revendications précédentes, dans lequel la sortie du moteur (111) est raccordée directement à l'entrée de la turbine (105), ladite entrée de turbine incluant un trajet de soupape de décharge utilisable pour contourner la turbine afin de commander la pression.

11. Ensemble à turbomachinerie selon l'une quelconque des revendications précédentes, incluant des capteurs d'oxygène (106) qui sont équipés d'un élément chauffant pour améliorer la précision durant des démarrages à froid et/ou des fonctionnements à charge partielle lorsqu'il y a une chaleur de gaz d'échappement insuffisante.

12. Ensemble à turbomachinerie selon l'une quelconque des revendications précédentes, dans lequel l'appareil venturi (500 ; 600) introduit une obstruction (502a, 502b ; 602) qui sert à fonctionnellement réduire la section (508 ; 608) du trajet d'écoulement de fluide, ainsi augmentant la vitesse d'écoulement autour de l'obstruction et pour réduire la pression statique locale, durant l'utilisation, afin de créer l'effet venturi.

13. Ensemble à turbomachinerie selon l'une quelconque des revendications précédentes, dans lequel le bord d'attaque de l'obstruction dans l'appareil venturi ou le point de raccordement est incurvé, plat ou à large surface exposée afin de fonctionnellement réduire la section d'écoulement effective (508 ; 608) tout en créant une région de séparation d'écoulement derrière l'obstruction en l'absence d'écoulement d'alimentation.
